# EUROPEAN PATENT SPECIFICATION

(11) **EP 2 069 257 B1**
(45) Date of publication and mention of the grant of the patent: **15.06.2011**
(21) Application number: 07825770.6
(22) Date of filing: 19.09.2007
(51) Int. Cl.: C04B 28/02, C04B 22/00

(54) **CONCRETE COMPOSITION WITH REDUCED SHRINKAGE**
BETONZUSAMMENSETZUNG MIT VERMINDERTER SCHRUMPFUNG
COMPOSITION DE BÉTON PRÉSENTANT UN RETRAIT RÉDUIT

(30) Priority: 20.09.2006 EP 06291472
(43) Date of publication of application: 17.06.2009
(73) Proprietor: Lafarge SA, F-75116 PARIS (FR)
(72) Inventor: CHANVILLARD, Gilles, F-38790 St Georges d'Esperanche (FR); BOIVIN, Sandra, F-92000 Nanterre (FR); THIERRY, Jean-Philippe, F-69004 Lyon (FR); GUIMBAL, Frédéric, Potomac,MD 20854 (US); GARCIA, Denis, F-34560 Montbazin (FR)
(74) Representative: Decourtye, David Olivier
(86) International application number: PCT/IB2007/003741
(87) International publication number: WO 2008/035221

(56) References cited:
- EP-A- 0 222 932
- EP-A- 1 081 113
- EP-A1- 1 008 568
- WO-A-99/15475
- CH-A5- 678 524
- US-A1- 2002 117 086
- US-A1- 2004 031 223
- US-B1- 6 251 179
- DATABASE WPI Week 199927 Derwent Publications Ltd., London, GB; AN 1999-323325 XP002423648 & JP 11 116315 A (TAKENAKA KOMUTEN KK) 27 April 1999 (1999-04-27) & JP 11 116315 A (TAKENAKA KOMUTEN CO) 27 April 1999 (1999-04-27)

## Description

This invention relates to a concrete composition having low shrinkage, and in particular a concrete composition useful for flooring.

The compositions of hydraulic mixtures used in ordinary concretes have been developed over time from the use of simple Ordinary Portland Cement (OPC), to more complex compositions which also include pozzolanic materials. Such materials include granulated blast furnace slags, fly ashes, and natural pozzolans. The inclusion of pozzolans permits the use of lower quantities of OPC in the concrete. The inclusion of additional materials, including pozzolans influences the properties of the resultant concrete.

One of the problems in the construction industry is cracking in concrete structures due to drying shrinkage. Drying shrinkage may occur when water evaporates from the hardened concrete, when the relative humidity of the environment is lower than 100%. The hydraulic mixture also absorbs water from the pore spaces in the concrete as a part of the hydraulic setting of the mixture causing further shrinkage sometimes referred to as chemical shrinkage. The internal stress caused by this shrinkage can give rise to cracks and other physical and aesthetic defects in the resultant structure.

It is necessary to incorporate joints into concrete structures to relieve tensile stresses which arise in the structure due to shrinkage-related volume changes. Joints are not aesthetically pleasing, and in large flat surfaces such as floors and facades there is generally a wish to reduce the number of joints necessary in the structure.

Conventional concrete has a high water to hydraulic mixture ratio of more than 0.6 in order to facilitate placing and consolidation of the concrete. The consequences of that high water content are lower compressive strength, lower abrasion resistance, as well as higher shrinkage in the slab.

As a result of the lower compressive strength a slab, e.g. in a floor, has to be designed with increased thickness and / or with more steel reinforcement in order to carry the working loads on the slab. Increased thickness means increased material and labor cost for the project.

In order to combat lower abrasion resistance, a concrete installer may use a dry aggregate addition to the surface of the slab, referred to as a 'shake'. The shake is troweled into the surface to increase abrasion resistance to, for example, rolling wheel loads. The use of the dry shake requires the additional cost of these products, and also additional equipment and labor to apply and trowel them into the surface.

An alternative to steel reinforcement bar (rebar) in the slab is the addition of steel fibers directly in the concrete. These fibers reduce the cost and time of installing the reinforcement in the slab on site. However there is additional time to charge the fibers in the mixer truck, the fibers make spreading and finishing of the concrete very difficult, and a shake is required in the finishing of the concrete to push the steel fibers down into the concrete away from the surface.

JP 11116315 A describes a fluid mortar containing a contraction reducing agent and a method of producing super-light-gauge, low shrinkage precast concrete panels from the mortar. The desired level of shrinkage is 200 micrometres or less per 100 mm of panel after 28 days. The production of a sample having a shrinkage of about 100 micrometres per 100 millimetres (1000 micrometres per metre, or 1 mm per metre) is exemplified.

US 2002/117086 A1 describes a cellular light weight concrete containing a shrinkage reducing agent (a synergistic mixture of an alkyl ether oxyalkylene adduct and a lower oxyalkylene glycol). According to EN 206-1 lightweight concrete has a density of below 2100 kg/m³. Cellular lightweight concrete also shows much larger drying shrinkage than regular concrete.

The present invention seeks to provide a concrete which possesses unexpectedly reduced levels of shrinkage which can be placed without steel reinforcement bar or steel fibers in floor slabs in sections up to 50 meter by 50 meter square sections with reduced cracking or without cracking and without the need for joints within the section; an un-reinforced concrete slab with improved abrasion resistance without the need for a dry shake aggregate troweled into the surface; and/or an un-reinforced concrete slab with improved abrasion resistance in reduced slab thickness for a given design load.

The present invention provides a concrete composition comprising:
- a hydraulic binder component which comprises cement, a particulate material having a size of less than 200 µm, and an expansive agent;
- a granular material having a size(D50) greater than 200 µm, preferably greater than 350 µm, more preferably greater than 500 µm;
- a shrinkage reducing agent;
- a superplasticizer; and
- water;
wherein the water to hydraulic binder ratio is from 0.1 to 0.5, preferably from 0.1 to 0.45, more preferably from 0.1 to 0.4 by weight, the shrinkage reducing agent is present at 0.1 to 1.0% by weight of binder, and the particulate materials are present in a concentration of from 10 to 80%, for example 10 to 50% by total weight of binder.

The cement is generally a Portland cement type as known in the art according to the European EN 197-1 classification, for example:
- I Portland cement (comprising Portland cement and up to 5% of minor addition constituents);
- II Portland-composite cement (Portland cement and up to 35% of other single constituents);
- III Blast furnace cement (Portland cement and higher percentages of blast furnace slag);
- IV Pozzolanic cement (comprising Portland cement and higher percentages of pozzolan); or
- V Composite cement (comprising Portland cement and higher percentages of blast furnace slag and pozzolan or fly ash).

In the concrete compositions of the invention when any one of type II to type V Portland cement is used the amounts of the Portland cement clinker and of other materials present in the cement are calculated on the same weight basis as if they were added separately. It will be understood that similar considerations apply when concrete compositions classified according to the standards of territories other than Europe are used.

Particulate materials: The particulate materials in the binder generally comprise pozzolanic materials and / or limestone fillers. They are fine particles having a size of less than 200 µm (defined as the particulate materials passing a screen of size 200 µm). They include pozzolanic materials or limestone fillers or a combination thereof. The particulate materials may have *inter alia* the effect of slowing down cement hydration and the drying of the water in the pores.

Suitable materials include synthetic particulates such as ground blast furnace slag, fly ash, silica fume and natural pozzolanic materials such as diatomaceous earth and calcined clays or shales or mixtures thereof. In the composition of the current invention the pozzolanic material is preferably present in a concentration of from 10 to 80%, for example 10 to 50% by total weight of binder. The particle size distribution of pozzolanic material can vary widely depending on the source and/or the process for its production.

Fine limestone fillers: Suitable limestone fillers include ground natural or precipitated calcium carbonate. The limestone filler generally has a D50 particle size of 2 - 50 µm, preferably 8-20 µm. The amount of limestone filler is preferably up to 30% of the total weight of binder.

Expansive agent: The expansive agent is generally a calcined magnesium carbonate or ,preferably, calcined calcium carbonate or a mixture thereof. The calcination is generally substantially complete so that magnesium oxide and calcium oxide, mixtures thereof and mixtures with the carbonates are embraced by the term expansive agent. The expansive agent is preferably ground to a fineness compatible with the cement. The amount of expansive additive is preferably from 2 to 10%, more preferably from 3 to 6% by total weight of binder. It is believed that the expansive agent normally reacts quickly, before the cement matrix has much strength. Then the long slow hydration shrinks against that expansion back to a near net shape at casting.

Granular materials: Granular materials have a size (D50) greater than 200 µm, preferably greater than 350 µm, more preferably greater than 500 µm,

Suitable granular materials include any single or combination of grades of hard natural or synthetic mineral (generally aggregates) in rounded or crushed form such that the D50 particle size of the combination is from 2 mm to 20 mm, preferably between 5 and 15 mm. The granular materials are generally present in an amount of 1 to 6, e.g.1.5 to 6, preferably 1.5 to 5, more preferably from 3.5 to 5, e.g. 3.5 to 4.5 times the total weight of binder.

The granular materials may also include a sand (preferably fine) or a mixture of sands, the or each sand having a D50 greater than 200 µm, preferably greater than 350 µm, more preferably greater than 500 µm.

When a mixture of aggregates and sand is used it will be understood that the relative proportions will depend on the quality of each. A mixture of, for example, approximately 50:50 sand and aggregate can be used.

Shrinkage reducing agent: shrinkage reducing agents are known and include low molecular weight glycols, polyalkyleneoxy (for example polyethyleneoxy or polypropyleneoxy) compounds, terminally alkyletherified or alkylesterified oxyalkylene polymers and cyclic acetals of a tri- or poly-hydric alcohol. Commercially available shrink reducing agents include Eclipse Floor (W.R.Grace & Co), Control 40, Control 50 (Sika), EPB (Chryso), Peramin SRA 330 (Perstorp AB), Rheocure (MBT, Spain), Tetraguard (MBT), 2-methyl-2,4-pentanediol (Aldrich) and dipropylene glycol tert-butyl ether (DPTB) (Aldrich). Mixtures of shrinkage reducing agents may be used and are present in certain commercial products.

Low molecular weight glycols include those having the formula CₙH₂ₙ(OH)₂ wherein n is 2 to 10, for example 2 to 9, which are dispersible in water. It will be understood that the two hydroxy (OH) groups are generally not attached to the same carbon atom. Suitable low molecular weight glycols include but are not limited to ethylene glycol, propylene glycol, butylene glycol, pentylene glycol or hexylene glycol (also known as 2-methyl-2,4-pentanediol). Mixtures of these glycols may also be used.

The polyalkyleneoxy compounds include those of the formula

R¹-[-O-CH(R²)-CH₂]ₙ-O-R³

wherein n is an integer from 1 to 15, preferably 1 to 5; R¹ represents hydrogen or alkyl of 1 to 5 carbon atoms; R² represents hydrogen or alkyl of 1 to 5 carbon atoms, preferably hydrogen or methyl; and R³ represents hydrogen, alkyl of 1 to 5 carbon atoms or a grouping -CH₂-CH(CH₃)OH or -CH(CH₃)CH₂OH. R¹, R² and R³ may be the same or different. The groups R² within a single molecule may be the same or different. The alkyl groups are straight- or branched- chain. R¹ and R³ may be hydrogen, methyl or t-butyl. Examples of polyalkyleneoxy compounds include diethylene glycol and triethylene glycol,

The shrinkage reducing agent is present in an amount of from 0.1 to 1.0% of the total weight of the binder, preferably of from 0.1 to 0.5% of the total weight of the binder.

Superplasticizer: superplasticizers include sulfonated melamine-formaldehyde condensates (SMF), sulfonated naphthalene-formaldehyde condensates (SNF) modified lignosulfonates (MLS), and polycarboxylate (e.g. acrylic) superplasticizers (PCS).

Polycarboxylate superplasticizers, in which other groups such as polyoxyethylene type side chains are grafted, may also be used. The amount of the superplasticizer in the composition of the present invention is generally from 0.1 to 2.0%, preferably from 0.1 to 0.8%, for example from 0.1 to 0.5% by weight relative to the total weight of binder.

Some superplasticizers are referred to as water reducers. In the Concrete Admixtures Handbook, Properties Science and Technology, V.S. Ramachandran, Noyes Publications, 1984:

A water reducer is defined as an additive which reduces the amount of mixing water of concrete for a given workability by typically 10 - 15%. Water reducers include, for example lignosulphonates, hydroxycarboxylic acids, carbohydrates, and other specialized organic compounds, for example glycerol, polyvinyl alcohol, sodium alumino-methyl-siliconate, sulfanilic acid and casein. Such water-reducing agents are embraced by the term superplasticizer as used in this specification including the accompanying claims.

Superplasticizers belong to a new class of water reducers chemically different from the normal water reducers and capable of reducing water contents by about 30%. The superplasticizers have been broadly classified into four groups: sulphonated naphthalene formaldehyde condensate (SNF) (generally a sodium salt); or sulphonated melamine formaldehyde condensate (SMF); modified lignosulfonates (MLS); and others. More recent superplasticizers include polycarboxylic compounds such as polyacrylates. The superplasticizer is preferably a new generation superplasticizer, for example a copolymer containing polyethylene glycol as graft chain and carboxylic functions in the main chain such as a polycarboxylic ether. Sodium polycarboxylate-polysulphonates and sodium polyacrylates may also be used. The amount of superplasticizer required generally depends on the reactivity of the cement. The lower the reactivity the lower the amount of superplasticizer required. In order to reduce the total alkali content the superplasticizer may be used as a calcium rather than a sodium salt.

The ratio of water to total binder in the compositions of the invention is preferably from 0.2 to 0.4, by weight. The concrete composition of the invention generally has a lower w/c ratio than standard concrete compositions.

The concrete according to the invention preferably comprises from 215 to 500, e.g. 215 to 450 kilograms per cubic meter, preferably from 290 to 450, e.g. 290 to 400 kilograms per cubic meter of cement.

The concrete according to the invention preferably comprises from 350 to 550 kilograms per cubic meter, preferably from 425 to 550, e.g. 425 to 475 kilograms per cubic meter of binder.

The density of the concrete according to the invention is generally greater than 2100 kg/m³ and usually less than 2600 kg/m³, the values quoted in EN 206-1.

The composition of the present invention may comprise other additives, e.g. setting retarder, fibres and/or defoamer.

A setting retarder may be used in order to obtain a setting time (period between the start of setting and the end of setting) which is compatible with the desired application. Suitable retarders for use in the composition of the present invention include carboxylic acids, e.g. citric acid, sugars and their derivatives, calcium proteinates and calcium polyoxymethylene amine acid. The compositions of the present invention generally comprise less than 0.5% of setting retarder relative to the total weight of binder.

The composition of the present invention may also comprise natural or synthetic fibers. Suitable fibres comprise polypropylene, or cellulose, as well as blended fibers. The amount of fibers in the composition of the present invention is generally less than 1 % of the total weight of the binder.

The defoamer may be a chemical defoamer, e.g. tri-butyl phosphate. The amount of defoamer in the compositions of the invention is generally less than 0.5% of the total weight of the binder.

The invention also provides a substantially dry composition comprising:
- a hydraulic binder component which comprises cement, particulate materials having a size of less than 200 µm, and an expansive agent;
- granular materials having a size(D50) greater than 200 µm, preferably greater than 350 µm, more preferably greater than 500 µm;
- a shrinkage reducing agent; and
- a superplasticizer;
wherein, the shrinkage reducing agent is present at 0.1 to 1.0% by weight of binder, and the particulate materials are present in a concentration of from 10 to 80%, for example 10 to 50% by total weight of binder for use in the preparation of a concrete composition according to the invention.

The invention is further illustrated in the accompanying drawings in which:

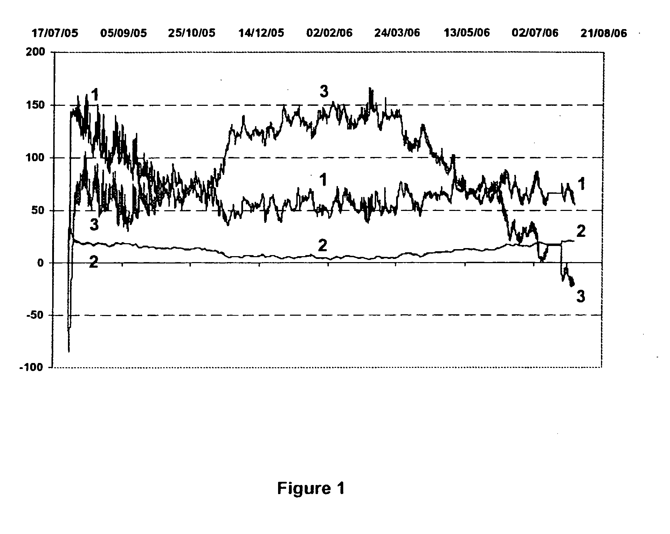

**Figure 1** shows the dimensional change of the floor prepared as described in Example 1 below measured by a strain gauge cast in the floor. Time is plotted on the x-axis (with dates indicated as day/month/year). Plot 1 corresponds to the raw data from the detector (with the dimensional change in micrometers on the y-axis). Plot 2 gives temperature data (the y-axis indicating the temperature in degrees Celsius). Plot 3 gives the dimensional data from the detector after correction for the temperature (with the dimensional change in micrometers on the y-axis).

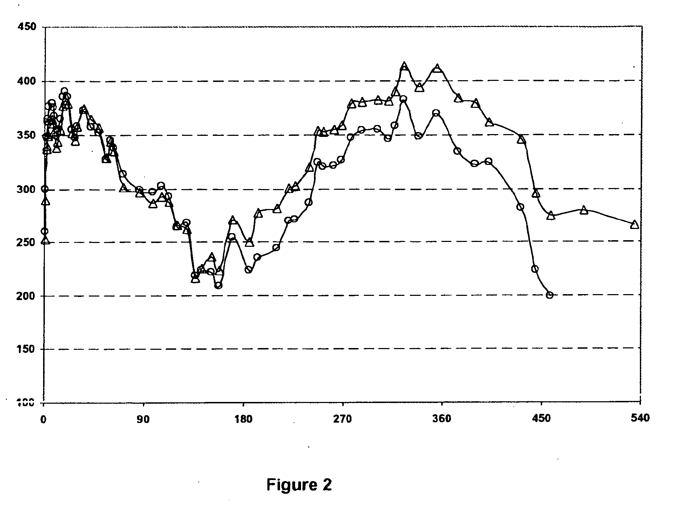

**Figure 2** shows the normalized deformation of the slab prepared as described in Example 2 below. The x-axis plots the time in days. The y-axis plots the deformation in microns: ○ = deformation measured by the detector situated at + 10 m along the slab; Δ = deformation measured by the detector situated at - 10 m along the slab.

The invention also provides a process for the preparation of a concrete composition of the invention, which process comprises mixing a substantially dry composition as defined above or the components of a substantially dry composition as defined above, with water, the relative amounts of each of the components and of water being as hereinbefore defined for the concrete compositions according to the invention. The process comprises, for example, the steps of: mixing the granular materials with the binder; adding water; adding the shrinkage reducing additive; and adding the superplasticizer.

There are many ways possible to carry out process of preparation including the following:
(i) premixing the granular materials in a mixer,
(ii) adding the hydraulic binder composition,
(iii) adding the water, shrinkage reducing agent, and other additives,
(iv) adding the superplastizer
(v) mixing the resulting composition together until uniform.

Alternatively some of the granular materials may be added to the mixer before the hydraulic binder, the shrinkage reducing additive, the superplasticizer, and the other additives if any. Then the rest of the granular materials can be added. The person of skill in the art will recognize a suitable order to ensure substantially uniform mixing in the particular mixing or batching equipment used.

Placing techniques: Placing techniques suitable for the wet concrete composition of the present invention are known. Preferably, the wet concrete destined for large areas- as in the case of concrete floors- is placed in long strips, in general by tail-gating. Intermediate contraction joints may be installed at specified intervals transverse to the length of the strips. In general, the wet concrete of the invention may be placed on the base at a rate at which it can be spread, bull floated or darbied and re-straightened to avoid bleeding water collecting on the surface. Spreading may be carried out by hand using shovels or preferably, by mechanical spreaders. Consolidation may be carried out by either internal or surface vibration. Screeding may be carried out by hand using a straightedge or by using a mechanical screed or by laser.

Curing techniques: Curing may be used as will be appreciated by the person skilled in the art. Concrete according to the invention is generally kept in a suitable moisture and temperature condition during its early stages in order to promote the development of strength and durability. The primary purpose of curing is to slow the loss of moisture from the slab, so that effective hydration may occur. It is advantageous to employ longer curing methods in order to reduce shrinkage. Objects prepared according to the invention may be cured by known curing methods. Typical curing conditions for a concrete floor prepared according to the invention are the following:

To prevent rapid loss of moisture from slabs with a large exposed surface area to volume ratio, and to provide reserve moisture for curing, the sub-grade or base upon which the concrete is to be laid is pre-wetted and allowed to stand to achieve a saturated but surface dry condition.

After finishing of the slab surface the curing process may include known water or sealing curing methods which are suitable for the curing of floor slab.

For example, water curing techniques suitable for concrete floors include ponding, sprinkling or immersion as suitable methods for slab areas without joints. Fog spraying is a preferred method. For curing of joints wet coverings or moisture retaining coverings, for example, Burlap, or more preferably, white fiber covering may be used. Seven days of uninterrupted curing is recommended for curing objects of the invention. Known precautions for cold and hot weather conditions may be taken if necessary.

The shrinkage reducing additive may be added after the other components of the present invention. This may be carried out by mixing with the other components before the object to be prepared is poured.

It will be understood that the mode of preparation of a concrete mixture is chosen taking into consideration the particular circumstances in which it is to be mixed, transported and used; factors to be considered in deciding which method to use include the following:
availability of the various composition components and access to mixing equipment,
time constraints;
transport constraints;
size of object to be prepared; and
binder composition.

The invention also provides a concrete object obtainable by the hardening of a concrete composition of the invention.

The concrete object is preferably in the form of a slab, e.g. a flooring slab. The object preferably has a maximum size of 50 m by 50 m, for example 40 m by 40 m, preferably 30m m by 30 m, for example 20 m by 20 m and preferably having a length of from 1 m (e.g. from 5 m), to 50 m (for example 40 m, preferably 30 m , for example 20 m) and preferably a width of from 1 m (e.g. from 5 m) to 50 m (for example 40 m, preferably 30 m , for example 20 m).

Shrinkage joint recommendations -When using known concretes joints are used in slab on-ground construction to limit the frequency and width of random cracks caused by volume changes. Generally, floor maintenance can be reduced if a limitation in the number of joints or an increase in the joint spacing can be accomplished without increasing the number of cracks. A reduction in, for example, wear and tear on fork lifts bearings and wheels may also be achieved. Reduced jointing permits faster construction methods, as jointing takes extra time to finish or cut. Thus it is clearly advantageous to reduce the number of joints in the concrete slabs.

Different expert bodies, including the ASTM, ACI and NF, have recommended guidelines for joint spacing in concrete floors when known concretes are used. The ACI recommendation for un-reinforced, plain concrete slabs is for joint spacing of 24-36 times the slab thickness up to a maximum spacing between joints of 6 meters. With this joint spacing, random cracks may be expected to occur in 0 - 3% of the floor slab panels. In general the joint spacing in standard nominally steel reinforced known concretes can be increased somewhat. In particular ACI recommendations are for contraction joints at a maximum spacing of 30 times the thickness for un-reinforced slabs (for example, 3-4 m in both directions for 100 mm slabs, and 5-6 m intervals for 200 mm slabs). By using the concrete formulation of the present invention, it is possible to prepare substantially crack- free concrete slabs with joint spacing up to four times or more the expert recommendations for known concretes. This effect is extremely important and advantageous for the reasons outlined above.

According to a further aspect of the present invention there is provided a concrete object obtainable from the concrete composition of the invention as hereinbefore defined having a maximum size of 50 m by 50 m, for example 40 m by 40 m, preferably 30m m by 30 m, for example 20 m by 20 m and preferably having a length of from 1 m ( e.g. from 5 m) to 50 m (for example 40 m, preferably 30 m , for example 20 m) and preferably a width of from 1 m (e.g. from 5 m) to 50 m (for example 40 m, preferably 30 m , for example 20 m).

The minimum thickness is generally about three times the maximum aggregate size: the upper limit of thickness is generally dictated by economic and design considerations. It will be understood that a suitable thickness and/or the maximum size compatible with reduced cracking or the absence of cracking will depend, inter alia, on the magnitude and nature of the loads and shocks to which the object, for example a floor, will be subjected and also on the base on which the floor is laid A resilient or insulating base may be used. Such a base may be used when, for example, the floor is intended to carry low loadings. A concrete floor for an office area will generally be subjected to lower loads and a lower incidence of shocks than an area used for a storage or warehousing area where, for example, fork lift trucks may be used.

In the present specification, including the accompanying claims:

The term "hydraulic binder" refers to a binder composition comprising cement, particulate materials, and an expansive agent:
Percentages, unless otherwise specified, are by weight.

Slump values are measured as follows :test samples are prepared using a flattened conical mould, height 300 mm, top diameter 100 mm, bottom diameter 200 mm, according to EN 12350-2; slump values are measured after the sample has stopped moving after demoulding. The procedure, from the start of filling the mould to demoulding is completed within 150 seconds.

The D50 particle size for fine particles refers to the 50^{th} percentile of the particle volumetric distribution; the D50 as defined herein for fine particles may also be referred to as the VD50. Mean particle sizes and distributions of fine particles can be measured by laser granulometry using a Malvern Mastersizer 2000. The D50 value for coarser materials is determined in known manner by sieving.

The following Examples illustrate the invention without limiting it.

### Example 1

A concrete composition was prepared containing the following materials with the following concentrations:

| Component | Parts | Wt % of total binder |
|---|---|---|
| Binder | | |
| Ordinary Portland cement CEM I Hope | 100 | 66.1 |
| Ground Blast Furnace Slag - Appleby | 43 | 28.4 |
| Expansive additive - calcium oxide (Lhoist) | 8.4 | 5.5 |

| Other components | | Wt % relative to total binder |
|---|---|---|
| Fine sand, 0-4 mm | 286.7 | 189.6 |
| Coarse aggregate 1 (4-10 mm) | 57.5 | 38.0 |
| Coarse Aggregates 2 (10 - 20 mm) | 230.3 | 152.2 |
| Low molecular weight glycol, Tetraguard (BASF) | 0.67 | 0.44 |
| Superplasticizer W.R. Grace Adva 450^{a} | 0.52 | 0.34 |
| | | |
| Water | 58.62 | 38.8 |

| | | |
|---|---|---|
| ^{a} Expressed in terms of solids content | | |

The ratio of granular materials (sand plus aggregates) to total binder is 3.8

The aggregates were proven in a laboratory mixer as follows. The granular materials were mixed for 30 seconds. The binder was added and mixed for 90 seconds, the water shrinkage reduction agent was added and mixed for 30 seconds and then the superplasticizer was added and the entire batch mixed for 90 seconds. The slump was measured after mixing as follows:

| Time after mixing | Spread dia. - cm | Slump vertical- cm |
|---|---|---|
| 0:12 | 47 | 24 |
| 0:35 | 47 | 24 |
| 1:14 | 54 | 24 |
| 2:00 | 62 | 24 |

The composition was batched in a standard concrete batch plant and delivered to the site in a standard concrete truck. The concrete was cast in a 20 m x 9 m rectangle without a control joint (thickness: 17 cm). The slab was instrumented for movement in the corners and monitored for temperature and relative humidity for a year in ambient conditions during use indoors at a logistics center.

The results shown in **Figure 1** (with one measurement per hour) are excellent and demonstrate the absence of substantial dimensional shrinkage.

Example 2 A concrete composition was prepared containing the following materials with the following concentrations:

| Component | Parts | Wt % of total binder |
|---|---|---|
| Binder | | |
| Ordinary Portland cement CEM I Val d'Azergues | 100 | 83.7 |
| Ground Blast Furnace Slag | - | - |
| Fine limestone filler - Omya Betoflow-OM | 12 | 10.0 |
| Expansive additive - calcium oxide (Balthazar & Cotte) | 7.5 | 6.3 |
| Other components | | |
| Fine sand (0-4 mm crushed) | 150 | 125.5 |
| Fine sand (0-5 mm river) | 50 | 41.8 |
| Coarse aggregate 1 (5-10 mm) | 90 | 75.3 |
| Coarse Aggregates 2 (10-20 mm) | 145 | 121.3 |
| Low molecular weight glycol W.R. Grace Tetraguard | 0.13 | 0.105 |
| Superplasticizer Glenium 51 MBT^{a} | 0.5 | 0.42 |
| | | |
| Water | 37.8 | 31.7 |

| | | |
|---|---|---|
| ^{a} Expressed in terms of solids content | | |

The weight ratio of dry granular materials to total binder is 3.6

The concrete was cast in a 20 m x 1 m rectangle without a control joint (thickness: 10 cm). The slab was instrumented for movement at both ends (relative to the length of the slab) and monitored for temperature and relative humidity in ambient conditions.

The results shown in **Figure 2** (where the deformation is normalized with respect to a temperature of 20°C) are excellent and demonstrate the absence of substantial dimensional shrinkage.

## Claims

1. A concrete composition comprising:
- a hydraulic binder component which comprises cement, particulate materials having a size of less than 200 µm, and an expansive agent;
- granular materials having a size(D50) greater than 200 µm;
- a shrinkage reducing agent;
- a superplasticizer; and
- water;
wherein the water to hydraulic binder ratio is from 0.1 to 0.5 by weight, the shrinkage reducing agent is present at 0.1 to 1.0% by weight of binder, and the particulate materials are present in a concentration of from 10 to 80% by total weight of binder.

2. A composition of claim 1, wherein the particulate material comprises pozzolanic materials and / or limestone fillers.

3. A composition according to claim 1 or 2 wherein the pozzolanic materials are selected from synthetic particulates and natural pozzolanic materials or combinations thereof.

4. A composition according to any one of the preceding claims wherein the cement is Portland Cement.

5. A composition according to any one of the preceding claims wherein the expansive agent is calcined magnesium carbonate, calcined calcium carbonate or a mixture thereof.

6. A composition according to any one of the preceding claims which composition comprises from 2 - 10% of expansive agent relative to the total weight of binder.

7. A composition according to any one of the preceding claims which comprises from 0.1% to 0.5% of shrinkage reducing agent relative to the total weight of binder.

8. A composition according to any one of the preceding claims wherein the superplasticizer is selected from sulfonated melamine-formaldehyde condensates (SMF), sulfonated naphthalene-formaldehyde condensates (SNF) modified lignosulfonates (MLS), and polycarboxylate copolymer superplasticizers.

9. A composition according to any one of the preceding claims which composition comprises from 1.5 to 6 times, relative to the total weight of binder, of granular materials.

10. A composition according to any one of the preceding claims which composition comprises from 215 to 450 kilograms of cement per cubic meter,

11. A composition according to any one of the preceding claims which composition comprises from 350 to 550 kilograms of binder per cubic meter.

12. A substantially dry composition comprising a hydraulic binder component which comprises cement, particulate materials having a size of less than 200 µm, and an expansive agent;
granular materials having a size (D50) greater than 200 µm;
a shrinkage reducing agent;
a superplasticizer; and
wherein the shrinkage reducing agent is present at 0.1 to 1.0% by weight of binder, and the particulate materials are present in a concentration of from 10 to 80% by total weight of binder, the relative amounts of each of the components being as defined for the concrete composition according to claim 1.

13. A process for the preparation of a concrete composition according to claim 1,
which process comprises mixing a substantially dry composition comprising a hydraulic binder component which comprises cement, particulate materials having a size of less than 200 µm, and an expansive agent;
granular materials having a size(D50) greater than 200 µm;
a shrinkage reducing agent;
a superplasticizer; and
wherein the shrinkage reducing agent is present at 0.1 to 1.0% by weight of binder, and the particulate materials are present in a concentration of from 10 to 80% by total weight of binder, or the components of such a substantially dry composition, with water, the relative amounts of each of the components and of water being as hereinbefore defined for the concrete composition according to claim 1.

14. A concrete object obtained by the hardening of a concrete composition according to any one of claims 1 to 11.

15. A concrete object according to claim 14 in the form of a slab and having a length of from 1 to 50 m and a width of from 1 to 50 m.

## Patentansprüche

1. Eine Betonzusammensetzung, umfassend:
- eine hydraulische Bindemittelkomponente, die Zement, teilchenförmige Materialien mit einer Größe von weniger als 200 µm und ein Expansionsmittel umfasst,
- körnige Materialien mit einer Größe (D50) von mehr als 200 µm,
- ein die Schrumpfung verringerndes Mittel,
- ein Superplastifizierungsmittel und
- Wasser,
wobei das Gewichtsverhältnis von Wasser zu hydraulischem Bindemittel 0,1 bis 0,5 beträgt, das die Schrumpfung verringernde Mittel zu 0,1 bis 1,0 %, bezogen auf das Gewicht des Bindemittels, vorliegt und die teilchenförmigen Materialien in einer Konzentration von 10 bis 80 %, bezogen auf das Gesamtgewicht des Bindemittels, vorliegen.

2. Eine Zusammensetzung nach Anspruch 1, wobei das teilchenförmige Material puzzolanische Materialien und/oder Kalksteinfüllstoffe umfasst.

3. Eine Zusammensetzung gemäß Anspruch 1 oder 2, wobei die puzzolanischen Materialien ausgewählt sind aus synthetischen teilchenförmigen und natürlichen puzzolanischen Materialien oder Kombinationen davon.

4. Eine Zusammensetzung gemäß einem der vorhergehenden Ansprüche, wobei der Zement Portland-Zement ist.

5. Eine Zusammensetzung gemäß einem der vorhergehenden Ansprüche, wobei das Expansionsmittel kalziniertes Magnesiumcarbonat, kalziniertes Calciumcarbonat oder eine Mischung davon ist.

6. Eine Zusammensetzung gemäß einem der vorhergehenden Ansprüche, wobei die Zusammensetzung 2 - 10 % des Expansionsmittels, bezogen auf das Gesamtgewicht des Bindemittels, umfasst.

7. Eine Zusammensetzung gemäß einem der vorhergehenden Ansprüche, welche 0,1 % bis 0,5 % des die Schrumpfung verringernden Mittels, bezogen auf das Gesamtgewicht des Bindemittels, umfasst.

8. Eine Zusammensetzung gemäß einem der vorhergehenden Ansprüche, wobei das Superplastifizierungsmittel ausgewählt ist aus sulfonierten Melamin-Formaldehyd-Kondensaten (SMF), sulfonierten Naphthalin-Formaldehyd-Kondensaten (SNF), modifizierten Lignosulfonaten (MLS) und Polycarboxylatcopolymer-Superplastifizierungsmitteln.

9. Eine Zusammensetzung gemäß einem der vorhergehenden Ansprüche, wobei die Zusammensetzung die 1,5- bis 6-fache Menge, bezogen auf das Gesamtgewicht des Bindemittels, an körnigen Materialien umfasst.

10. Eine Zusammensetzung gemäß einem der vorhergehenden Ansprüche, wobei die Zusammensetzung von 215 bis 450 Kilogramm Zement pro Kubikmeter umfasst.

11. Eine Zusammensetzung gemäß einem der vorhergehenden Ansprüche, wobei die Zusammensetzung von 350 bis 550 Kilogramm Bindemittel pro Kubikmeter umfasst.

12. Eine im Wesentlichen trockene Zusammensetzung, umfassend
eine hydraulische Bindemittelkomponente, die Zement, teilchenförmige Materialien mit einer Größe von weniger als 200 µm und ein Expansionsmittel umfasst,
körnige Materialien mit einer Größe (D50) von mehr als 200 µm,
ein die Schrumpfung verringerndes Mittel,
ein Superplastifizierungsmittel, und
wobei das die Schrumpfung verringernde Mittel zu 0,1 bis 1,0 %, bezogen auf das Gewicht des Bindemittels, vorliegt und die teilchenförmigen Materialien in einer Konzentration von 10 bis 80 %, bezogen auf das Gesamtgewicht des Bindemittels, vorliegen, wobei die relativen Mengen von jeder der Komponenten wie für die Betonzusammensetzung gemäß Anspruch 1 definiert sind.

13. Ein Verfahren zur Herstellung einer Betonzusammensetzung gemäß Anspruch 1, wobei das Verfahren umfasst: Mischen einer im Wesentlichen trockenen Zusammensetzung, umfassend eine hydraulische Bindemittelkomponente, die Zement, teilchenförmige Materialien mit einer Größe von weniger als 200 µm und ein Expansionsmittel umfasst,
körnige Materialien mit einer Größe (D50) von mehr als 200 µm,
ein die Schrumpfung verringerndes Mittel,
ein Superplastifizierungsmittel, und
wobei das die Schrumpfung verringernde Mittel zu 0,1 bis 1,0 %, bezogen auf das Gewicht des Bindemittels, vorliegt und die teilchenförmigen Materialien in einer Konzentration von 10 bis 80 %, bezogen auf das Gesamtgewicht des Bindemittels, vorliegen, oder der Komponenten einer solchen im Wesentlichen trockenen Zusammensetzung mit Wasser, wobei die relativen Mengen von jeder der Komponenten und von Wasser wie vorstehend für die Betonzusammensetzung gemäß Anspruch 1 definiert sind.

14. Ein Betongegenstand, der durch das Härten einer Betonzusammensetzung gemäß einem der Ansprüche 1 bis 11 erhalten wird.

15. Ein Betongegenstand gemäß Anspruch 14 in Form einer Platte und mit einer Länge von 1 bis 50 m und einer Breite von 1 bis 50 m.

## Revendications

1. Composition de béton comprenant :
- -un liant hydraulique comprenant du ciment, des matériaux particulaires ayant une taille inférieure à 200 µm, et un agent expansif ;
- -des matériaux granulaires ayant une taille (D50) supérieure à 200 µm ;
- -un agent de réduction de retrait ;
- -un superplastifiant ; et
- -de l'eau ;
dans laquelle le rapport eau sur liant hydraulique est compris entre 0,1 et 0,5 en poids, l'agent réduction de retrait est présent entre 0,1 et 1,0 % en poids du liant, et les matériaux particulaires sont présents dans une concentration entre 10 et 80 % en poids total du liant.

2. Composition selon la revendication 1, dans laquelle le matériau particulaire comprend des matériaux pouzzolaniques et/ou des charges calcaires.

3. Composition selon la revendication 1 ou 2, dans laquelle les matériaux pouzzolaniques sont choisis parmi les matériaux particulaires synthétiques et les matériaux pouzzolaniques naturels ou leurs mélanges.

4. Composition selon l'une quelconque des revendications précédentes, dans laquelle le ciment est du ciment Portland.

5. Composition selon l'une quelconque des revendications précédentes, dans laquelle l'agent expansif est du carbonate de magnésium calciné, du carbonate de calcium calciné ou un mélange de ceux-ci.

6. Composition selon l'une quelconque des revendications précédentes comprenant de 2 à 10 % de l'agent expansif par rapport au poids total du liant.

7. Composition selon l'une quelconque des revendications précédentes comprenant de 0,1 % à 0,5 % de l'agent de réduction de retrait par rapport au poids total du liant.

8. Composition selon l'une quelconque des revendications précédentes, dans laquelle le superplastifiant est choisi parmi les condensats de mélamine-formaldéhyde sulfoné (SMF), les condensats de naphtalène-formaldéhyde sulfonés (SNF), les lignosulfonates modifiés (MLS), et les superplastifiants copolymères polycarboxylates.

9. Composition selon l'une quelconque des revendications précédentes comprenant de 1,5 à 6 fois, par rapport au poids total de liant, de matériaux granulaires.

10. Composition selon l'une quelconque des revendications précédentes comprenant de 215 à 450 kilogrammes de ciment par mètre cube.

11. Composition selon l'une quelconque des revendications précédentes comprenant de 350 à 550 kilogrammes de liant par mètre cube.

12. Composition sensiblement sèche comprenant un composant liant hydraulique comprenant du ciment, des matériaux particulaires ayant une taille inférieure à 200 µm, et un agent expansif ;
des matériaux granulaires ayant une taille (D50) supérieure à 200 µm ;
un agent de réduction de retrait ;
un superplastifiant ; et
dans laquelle l'agent de réduction de retrait est présent entre 0,1 et 1,0 % en poids du liant, et les matériaux particulaires sont présents dans une concentration entre 10 et 80 % en poids total du liant, les quantités relatives de chacun des composants étant tels que définies pour la composition de béton selon la revendication 1.

13. Procédé de préparation d'une composition de béton selon la revendication 1, comprenant le mélange d'une composition sensiblement sèche comprenant un composant liant hydraulique comprenant du ciment, des matériaux particulaires ayant une taille inférieure à 200 µm, et un agent expansif ;
des matériaux granulaires ayant une taille (D50) supérieure à 200 µm ;
un agent de réduction de retrait ;
un superplastifiant ; et
dans laquelle l'agent de réduction de retrait est présent entre 0,1 et 1,0 % en poids du liant, et les matériaux particulaires sont présents dans une concentration entre 10 et 80 % en poids total du liant, ou les composants de ladite composition sensiblement sèche avec de l'eau, les quantités relatives de chacun des composants et de l'eau étant tels que définies précédemment pour la composition de béton selon la revendication 1.

14. Objet en béton obtenu par le durcissement d'une composition de béton selon l'une quelconque des revendications 1 à 11.

15. Objet en béton selon la revendication 14, sous la forme d'une dalle ayant une longueur de 1 à 50 m et une largeur de 1 à 50 m.
